# EUROPÄISCHE PATENTANMELDUNG

(11) **EP 1 884 389 A2**
(43) Veröffentlichungstag der Anmeldung: **06.02.2008**
(21) Anmeldenummer: 07014969.5
(22) Anmeldetag: 31.07.2007
(51) Int. Cl.: B60J 7/20

(54) **Cabriolet-Fahrzeug mit einem Deckelteil für den Dachablageraum**

(30) Priorität: 31.07.2006 DE 102006035518
(71) Anmelder: Wilhelm Karmann GmbH, 49084 Osnabrück (DE)
(72) Erfinder: Böhnke, Achim, 49545 Tecklenburg (DE); Selle, Heinrich, 32549 Bad Oeynhausen (DE)

(57) **Zusammenfassung**

Ein Cabriolet-Fahrzeug (1) mit einem in Öffnungsstellung im hinteren Fahrzeugbereich in einem Dachablageraum halterbaren Dach (2), wobei zur zumindest teilweisen Abdeckung des Dachablageraums ein Deckelteil (8) vorgesehen ist, das mehrteilig ausgebildet ist und einen gegenüber der Fahrzeugkarosserie (3) beweglichen Hauptteil (9) sowie eine gegenüber diesem mittelbar oder unmittelbar verlagerbare Erweiterung (10) umfasst, die zwischen einer zu einer Oberseite (11) des Hauptteils (9) zumindest nahezu fluchtenden Stellung und einer Speicherstellung unter den Hauptteil (9) verlagerbar ist, wird so ausgebildet, dass die Erweiterung (10) in Speicherstellung beabstandet zu sie haltenden Teilen einer Anbindung (11) verriegelbar ist.

## Beschreibung

Die Erfindung betrifft ein Cabriolet-Fahrzeug mit einem Aufnahmeraum für das geöffnete und im Fahrzeug abgelegte Dach, der mittels eines Deckelteils zumindest bereichsweise abdeckbar ist, nach dem Oberbegriff des Anspruchs 1.

Es ist bekannt, Cabriolet-Fahrzeuge mit einem Deckelteil für den Dachaufnahmeraum zu versehen, der einen gegenüber der Fahrzeugkarosserie beweglichen Hauptteil und eine Erweiterung umfasst, die dem Hauptteil derart zugeordnet ist, dass sie gegenüber diesem ein- und auswärts beweglich ist und in einwärts verlagerter Speicherstellung zum Beispiel den Durchtritt des Daches und/oder die geschlossene Dachstellung ermöglicht. In geöffneter Dachstellung liegt die Erweiterung nach Art einer Hutablage in etwa fluchtend zur Oberseite des Hauptteils vor dieser.

Sofern ein relativ großer Durchtrittsraum für das Dach erforderlich ist, beispielsweise wenn dieses einen Innenraum mit mehreren Sitzreihen abdecken soll, ist eine Erweiterung erforderlich, die in auswärts verlagerter Stellung eine große Tiefe in Fahrzeuglängsrichtung überdecken muss. Dabei ist, da die Erweiterung etwa für Paraden oder ähnliche veranstaltungen auch als Sitzfläche geeignet sein muss, nicht ein beliebiger Leichtbau möglich. Die Erweiterung kann daher ein erhebliches Gewicht bekommen, was ihre Halterung an dem Hauptteil in einwärts verlagerter Speicherstellung problematisch machen kann und eine ebenfalls schwere Haltemechanik erforderlich macht. Dies ist jedoch unerwünscht, da die Fahrzeugmasse möglichst gering gehalten werden soll und auch der Hauptteil selbst nicht als Sitzfläche benutzbar sein muss. Dessen Masse könnte daher ohne die zusätzliche Stabilitätsanforderung zum Halten der Erweiterung deutlich geringer ausfallen.

Der Erfindung liegt das Problem zugrunde, trotz einer stabilen Erweiterung den Hauptteil möglichst leicht ausbilden zu können.

Die Erfindung löst dieses Problem durch ein Cabriolet-Fahrzeug mit den Merkmalen des Anspruchs 1 sowie durch ein Cabriolet-Fahrzeug mit den Merkmalen des Anspruchs 2, die gemeinsam mit den Merkmalen des Anspruchs 1 verwirklicht sein können. Hinsichtlich vorteilhafter Ausgestaltungen der Erfindung wird auf die weiteren Ansprüche 3 bis 13 verwiesen.

Durch die Erfindung ist in der Ausbildung nach Anspruch 1 mit der von der Anbindung der Erweiterung beabstandeten Verriegelung eine weitere Abstützung für die Erweiterung in versenkter Speicherstellung erreicht, so dass ihre Gewichtskraft besser verteilt ist und nicht nur auf beispielsweise Schwenkgelenken am Hauptteil lastet. Insbesondere kann die Verriegelung der Erweiterung an einem von Schwenkgelenken gegenüber gelegenen Ende des Hauptteils angreifen, um eine möglichst gleichmäßig verteilte Abstützung der Erweiterung am Hauptteil zu erreichen. Idealerweise kann Gewichtsverteilung damit etwa 50:50 an zum Beispiel einer Linie einer vorderen Anlenkung und an einer hinteren verriegelung betragen.

Besonders günstig ist die Erweiterung am Hauptteil verriegelbar und kann damit in verriegelter Stellung mit diesem bewegt werden, so dass auch während des Öffnens oder Schließens des Deckelteils bereits die Erweiterung in Verriegelungsstellung gehalten sein kann. Zudem müssen keine Widerlager für die Verriegelung der gespeicherten Erweiterung an der Karosserie vorgesehen sein. Der Kofferraum bleibt dadurch ohne Einschränkung. Zudem kann bei der Montage des Deckelteils die Erweiterung bereits in daran verriegelter Stellung gehalten sein, wodurch die Montage vereinfacht ist.

Insbesondere wenn die Erweiterung gegenüber dem Hauptteil um eine Querachse nach unten einschwenkbar ist, können die Schwenkgelenke durch die zusätzliche verriegelung entlastet werden.

Für eine maximale Stabilität ist es günstig, wenn der Hauptteil in Seitenansicht abgewinkelt ist, in geschlossener Stellung einen im wesentlichen horizontal liegenden sowie einen im wesentlichen vertikal stehenden Abschnitt umfasst und die verriegelung an dem vertikalen Abschnitt angeordnet ist.

Sofern die Verriegelung einer in fluchtender Stellung vorderen Kante der Erweiterung zugeordnet ist, ist diese in Speicherstellung an ihrem hinteren und ihrem vorderen Kantenbereich gehalten, so dass ihr Gewicht besonders gut verteilt abgestützt ist.

Eine mechanisch und konstruktiv einfache Ausbildung für die Verriegelung sieht vor, dass diese zumindest einen ausschiebbaren Bolzen als Riegel umfasst, der in ein Widerlager an einer aufragenden Innenwandung des Hauptteils einschiebbar ist. Ein solcher bewegbarer Bolzen kann als Standardteil erworben werden, etwa aus einer Zentralverriegelung. Die Erfindung ist daher preisgünstig zu verwirklichen.
weiter kann vorteilhaft die Verriegelung in Doppelfunktion auch bei geöffnetem Dach und geschlossenem Deckelteil zur Halterung der Erweiterung an der Karosserie wirksam sein, um somit die Belastbarkeit der Erweiterung steigern und diese zum Beispiel auch als Sitzfläche nutzen zu können.

Dabei kann besonders günstig die Verriegelung die Erweiterung in zu der Oberseite des Hauptteils zumindest nahezu fluchtender Stellung an einem Widerlager des Karosserierohbaus und in geöffneter Stellung am Hauptteil des Deckelteils halten, so dass für die fluchtende Stellung kein zusätzlicher konstruktiver Aufwand am Deckelteil betrieben werden muss. Eine einfache Bohrung oder dergleichen Widerlager am Rohbau kann einfach verwendet werden.

Die Erweiterung kann bei Ausbildung mit einem mittleren Abschnitt und gegenüber diesem beweglichen Seitenteilen, die in eingeschwenkter Stellung der Erweiterung mit einer abwärtsgerichteten Komponente gegenüber dem Mittelteil abgewinkelt stehen, bei minimalem Packmaß dennoch einen sehr breiten Raum abdecken.

Dabei ist vorteilhaft die Bewegung der Seitenteile zum mittleren Abschnitt ohne eigenen Antrieb, etwa über Seilzüge, bewirkbar, so dass auch insofern der konstruktive Aufwand gering ist.

Auch kann das erfindungsgemäße Fahrzeug ein Dach mit bei Öffnung eindrehbaren C-Säulen aufweisen, wodurch das erforderliche Packmaß des Daches verringert ist und die Quererstreckung des Deckelteils sehr gering sein kann : Die C-Säulen können während der Dachöffnung eingedreht werden und liegen bei geöffnetem Dach oberhalb der Heckscheibe, so dass das Maß des abgelegten Dachpakets nach unten nicht vergrößert ist. Da das vorgeordnete Dachteil ohnehin in abgelegter Stellung gegenläufig zum hinteren Dachteil orientiert und gewölbt ist, steht für die eingeschwenkten C-Säulen genug Raum zur Verfügung, ohne dass die Dicke des abgelegten Dachpakets zunehmen müsste. Insbesondere können die C-Säulen in den Hohlraum zwischen gegenläufig gewölbten Dachteilen einschwenkbar sein. Das Dachpaket ist deutlich schmaler gegenüber festen C-Säulen, wodurch der Ablageraum des Daches verschmälert und die Randfuge des Deckelteils erheblich zur Fahrzeugmitte hin rücken kann, was die Designmöglichkeiten am Fahrzeug verbessert. Gleichzeitig ist das Paket der abgelegten Dachteile auch flacher, wodurch auch das Fahrzeugheck in optisch angenehmerem, flacherem Design ausgeführt sein kann.

Die Erweiterung kann sehr groß ausgebildet sein und insbesondere in Fahrzeuglängsrichtung eine erhebliche Erstreckung aufweisen. Dies ist jedoch nicht zwingend. Zudem kann eine erfindungsgemäß verriegelbare Erweiterung in ihrer zu der Oberseite des Hauptteils zumindest nahezu fluchtenden Stellung auch einen Durchtrittsbereich für Dachgestängeteile zumindest teilweise abdecken.

Weitere Vorteile und Merkmale der Erfindung ergeben sich aus einem in der zeichnung schematisch dargestellten und nachfolgend beschriebenen Ausführungsbeispiel des Gegenstandes der Erfindung.

In der Zeichnung zeigt:
- Fig. 1: eine perspektivische, nach vorne und unten abgebrochene Ansicht des Heckbereichs eines schematisch angedeuteten erfindungsgemäßen Cabriolet-Fahrzeugs von schräg hinten bei geschlossenem Dach,
- Fig. 2: eine ähnliche Ansicht wie Fig. 1 bei geöffnetem Dach, das in einem von einem Deckelteil abgedeckten Ablageraum aufgenommen ist, wobei eine Erweiterung gegenüber einem Hauptteil des Deckelteils auswärts verlagert ist,
- Fig. 3: einen Schnitt entlang der Linie III-III in Fig. 1,

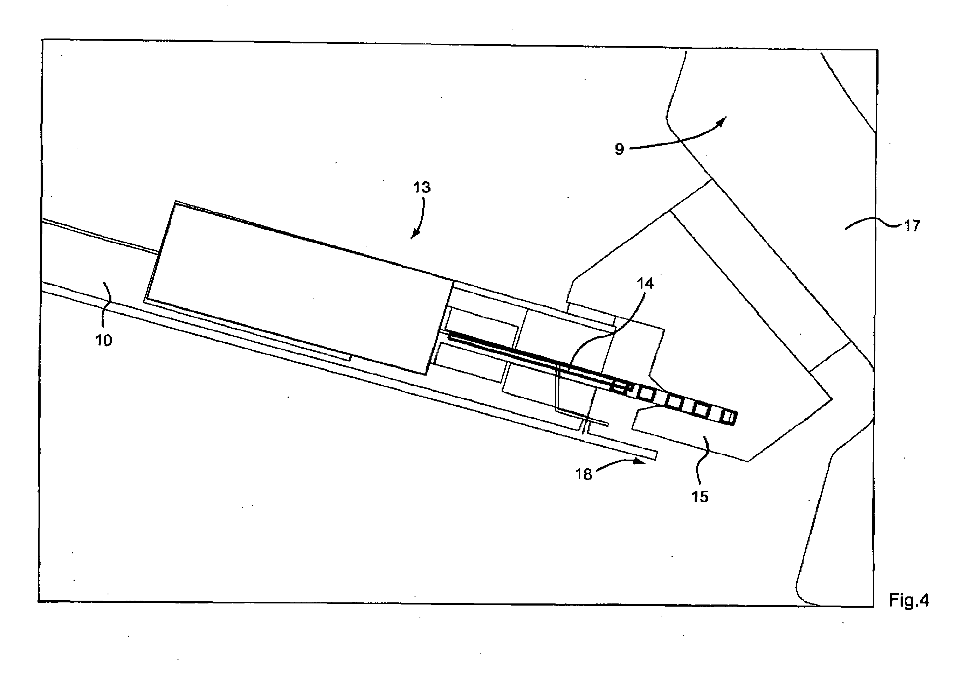

- Fig. 4: das Detail IV in Fig. 3,
- Fig. 5: das Deckelteil mit gemäß Figur 2 ausgeschwenkter Erweiterung und deren zusätzlicher Verriegelung an der Karosserie in Ansicht von unten,

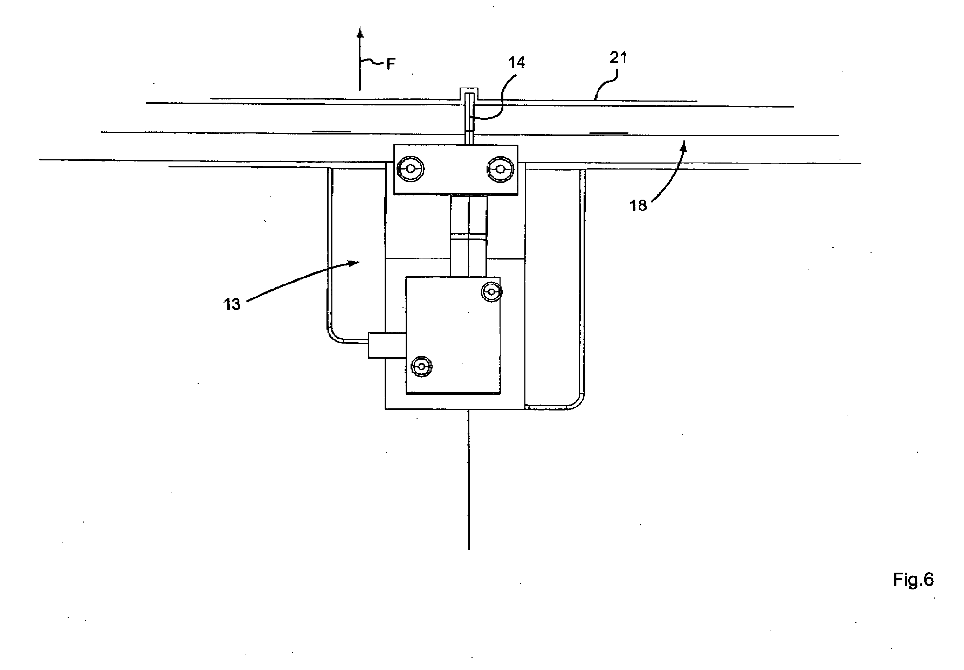

- Fig. 6: das Detail VI in Fig. 5.

Das erfindungsgemäße Cabriolet-Fahrzeug 1 umfasst im hier dargestellten Ausführungsbeispiel insgesamt ein Dach 2 mit festen Dachteilen, häufig auch Retractable Hardtop (RHT) bezeichnet, das zu seiner Ablage einen großen Durchtrittsraum in die Karosserie 3 benötigen kann. Auch für beispielsweise Softtops, die einen großen Insassenraum überspannen und daher ebenfalls einen großen Durchtrittsraum benötigen, ist die Erfindung vorteilhaft.

Das erfindungsgemäße Cabriolet-Fahrzeug 1 kann sowohl ein Zweisitzer sein als auch insbesondere einen größeren Insassenraum mit zwei oder sogar mehr Sitzreihen hintereinander umfassen. Die Erfindung ist sowohl bei Fahrzeugen mit manuell zu bewegenden Dächern auch insbesondere bei voll- oder teilautomatischer Beweglichkeit des Daches 2 anwendbar.

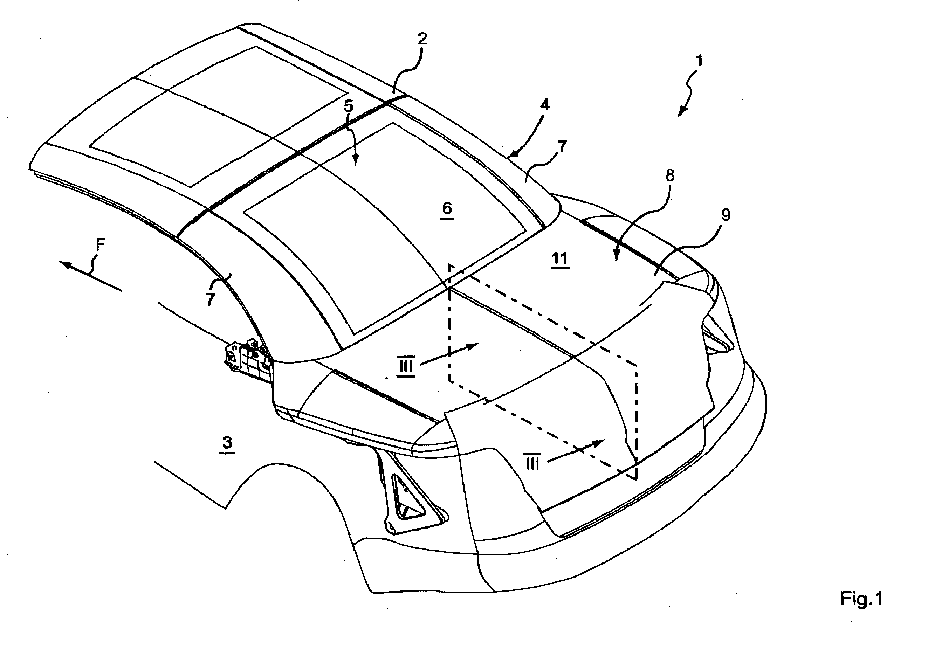

Bei dem in Figur 1 dargestellten Fahrzeug 1 ist ein RHT mit einem hinteren Dachabschnitt 4 vorgesehen, der im bezüglich der Fahrzeugquerrichtung mittleren Bereich 5 eine Heckscheibe 6 und seitlich außen gegenüber dieser separat bewegliche C-Säulen 7 umfasst.

Die C-Säulen 7 sind hier bei der Dachöffnung gegenüber dem mittleren Abschnitt 5 mit der Heckscheibe 6 des Dachabschnitts 4 einschwenkbar, wodurch sich eine schmale und dennoch flache Ablagemöglichkeit des Daches 2 ergibt.

Zur Dachöffnung ist der hintere Dachabschnitt 4 um eine horizontale und quer zum Fahrzeug 1 liegende erste Schwenkachse heckwärts und abwärts verlagerbar und ein vorgeordneter Dachabschnitt an den hinteren heranschwenkbar. Während der Dachbewegung ist ein Deckelteil 8, das einen Ablageraum des Daches 2 in dessen geöffneter Stellung abdeckt, um eine hintere Querachse aufgeschwenkt.

Das Deckelteil 8 ist zudem mehrteilig ausgebildet und umfasst in seinem hinteren Bereich einen Hauptteil 9, der beweglich an der Karosserie 3 gehalten ist, und im vorderen Bereich eine ebenfalls flächige - hier beispielhaft großflächig und mit einer erheblichen Tiefe gezeichnete - Erweiterung 10, die gegenüber dem Hauptteil ein- und auswärts verlagerbar ist. Diese Erweiterung 10 kann eine erhebliche Erstreckung von mehreren zehn Zentimetern in Fahrzeuglängsrichtung haben. Damit verbunden kann ein Gewicht von einigen Kilogramm bis über zehn Kilogramm sein. Auch eine kleinere Erweiterung, zum Beispiel nur oder auch zum Abdecken von Durchtrittöffnungen eines Dachgestänges durch die Ebene des Deckelteils 8, kann erfindungsgemäß ausgebildet sein.

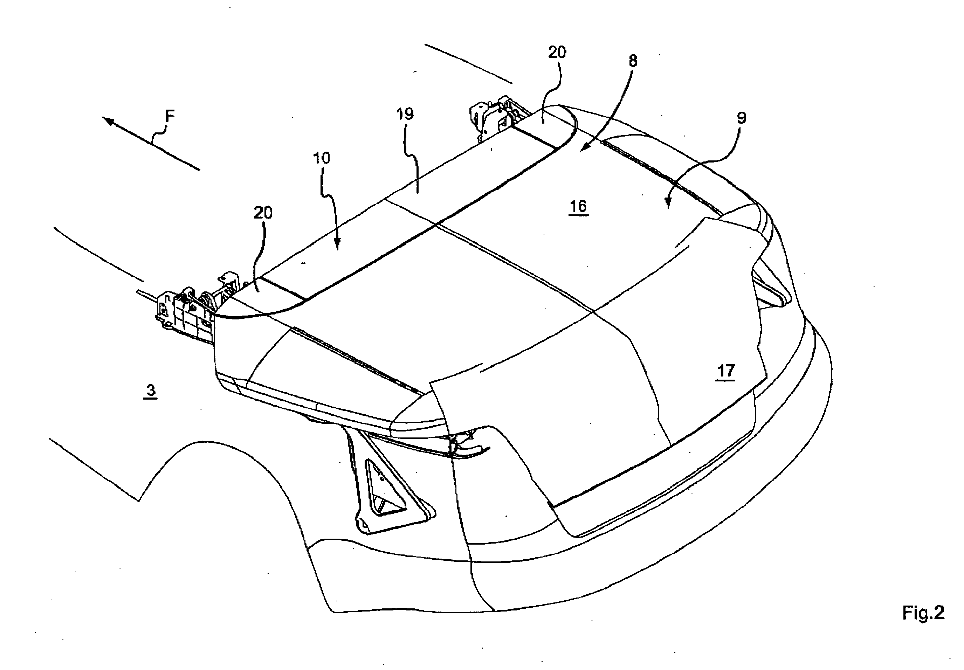

Die Erweiterung 10 ist bei abgelegtem Dach 2 über diesem in auswärts verlagerter Stellung (Fig. 2) in einer zu einer Oberseite 11 des Hauptteils 9 zumindest nahezu fluchtenden Stellung gemäß der zeichnung nach Art einer Hutablage gehalten. In der einwärts verlagerten Stellung, die hier auch als Speicherstellung bezeichnet wird, ist die Erweiterung 10 unter dem Hauptteil 9 abgesenkt gehalten. Gemäß dem Ausführungsbeispiel ist die (große) Erweiterung 10 auch bei geschlossenem Dach 2 nach Figur 1 in Speicherstellung gehalten. Eine zweite Hutablage kann dann zum Beispiel am hinteren Dachabschnitt 4 gehalten und in dieser Stellung geschlossen sein.

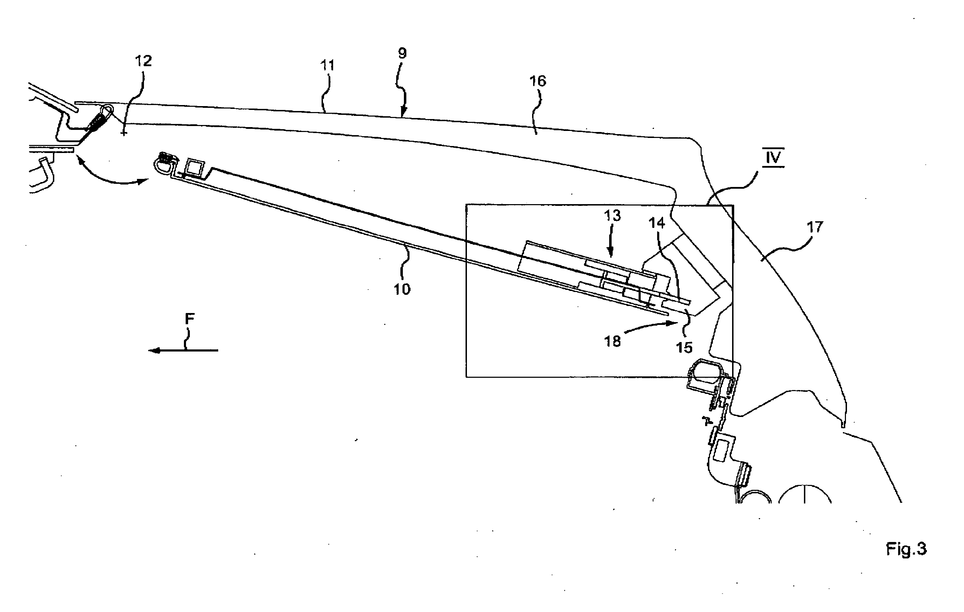

Wie in dieser Speicherstellung nach Figur 3 sichtbar ist, ist die Erweiterung 10 an Anbindungen 12, die hier als einfache Schwenkgelenke ausgebildet sind, am Hauptteil 9 beweglich gehalten. Die Erweiterung 10 ist dadurch gegenüber dem Hauptteil 9 um eine Querachse nach unten einschwenkbar. Auch eine mehrgelenkige Anbindung 12, zum Beispiel als Viergelenk, ist je nach Raumverhältnissen möglich.

Zusätzlich ist die Erweiterung in dieser Speicherstellung beabstandet zu der oder den Anbindung(en) 12 - gemäß der Zeichnung am Hauptteil 9 - verriegelbar. Auch eine Verriegelung an der Karosserie 3 wäre denkbar, würde jedoch zum Beispiel quer ausgreifende Bolzen erfordern, die häufig den Kofferraum einschränken würden, so dass die Verriegelung am Hauptteil 9 besondere Raumvorteile und wegen der modulartigen vorfertigungs- und Funktionstestmöglichkeit auch Montagevorteile mit sich bringt.

Für die Verriegelung 13 ist zumindest ein motorisch verschiebbarer - oder verschwenkbarer - Bolzen 14 vorgesehen, der in ein Widerlager 15 am Hauptteil 9 einschiebbar ist und dadurch als Riegel wirkt. Die Einheit mit dem Bolzen 14 kann vorteilhaft eine preiswerte und leichte Standardbaueinheit mit einem einfach geradlinig ausschiebbaren Bolzen aus einer Zentralverriegelung sein, zum Beispiel ansonsten für eine Tankklappenverriegelung benutzt, wodurch die Fertigungs- und Montagekosten minimiert sind und dennoch der Bolzen 14 einen eigenen Antrieb erhalten kann. Statt des Bolzens 14 kann prinzipiell beispielsweise auch ein Hakenteil oder ähnliches vorgesehen sein.

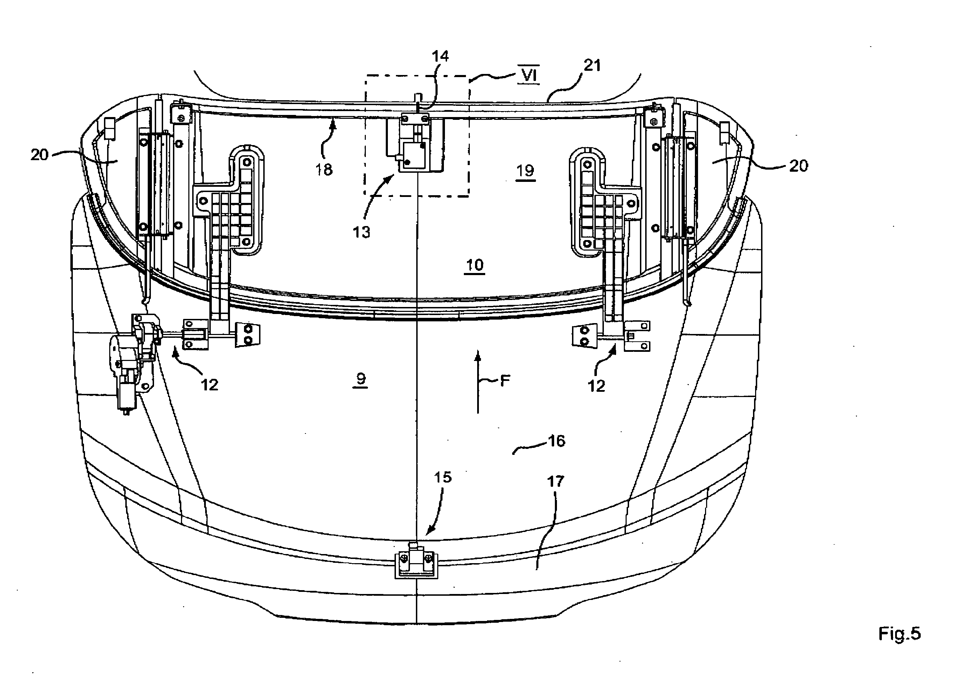

Der Hauptteil 9 ist in Seitenansicht L-förmig abgewinkelt (Figur 3) und umfasst einen in geschlossener Stellung im wesentlichen horizontal liegenden oberen Abschnitt 16 sowie einen im wesentlichen vertikal stehenden hinteren Abschnitt 17. Das widerlager 15 - und damit die in Speicherstellung geschlossene Verriegelung 13 - ist an dem vertikalen Abschnitt 17 angeordnet. Gleichzeitig ist die Einheit mit dem ausschiebbaren Bolzen 14 einer in fluchtender Stellung der Erweiterung 10 vorderen Kante 18 zugeordnet. Dadurch ergibt sich in der Speicherstellung eine Halterung der Erweiterung 10 an ihren beiden entgegengesetzten Enden, wodurch eine maximale Stabilisierung der eingeschwenkten Erweiterung 10 erreicht ist. Diese kann eine Erstreckung erreichen, die ungefähr der Erstreckung des horizontalen Abschnitts 16 des Hauptteils 9 entspricht, ohne Gefahr zu laufen, in Speicherstellung nach unten abzukippen und ohne zu große Dimensionierungen der Anbindung(en) 12 zu erfordern. Auch zwei den Queraußenseiten zugeordnete Verriegelungen 13 sind beispielsweise möglich. Dies gilt insbesondere dann, wenn die Verriegelung 13 in weiterer Funktion auch die Erweiterung 10 bei geöffnetem Dach und geschlossenem Deckelteil 8 an einem nach vorne anschließenden Karosseriebereich 21, zum Beispiel einer Rückwand des Insassenraums, halten kann. Die Erweiterung 10 erhält dann eine zusätzliche Stabilisierung in ihrer fluchtenden Lage und kann auch als Sitzfläche, etwa bei Paraden oder Auto-Korsos, genutzt werden. In Figur 5 ist eine solche Zusatzfunktion für nur eine zentrale Verriegelung 13 schematisch angedeutet.

Die stabile Abstützung der Erweiterung 10 macht es auch möglich, dass diese einen mittleren Abschnitt 19 und gegenüber diesem bewegliche Seitenteile 20 umfasst, die zum Beispiel in eingeschwenkter Stellung der Erweiterung 10 mit einer abwärtsgerichteten Komponente gegenüber dem mittleren Abschnitt 19 abgewinkelt stehen und dabei nach unten weisen. In fluchtender Stellung der Erweiterung 10 (Fig. 2) liegen die Seitenteile 20 dann ebenfalls fluchtend zum mittleren Abschnitt 19 und zur Oberseite 11 des Hauptteils 9.

Die Bewegung der Seitenteile 20 zum mittleren Abschnitt 19 kann auch ohne eigenen Antrieb bewirkbar sein, etwa über von der Dachbewegung angesteuerte Bowdenzüge, die gegen Federkraft arbeiten.

Das gesamte mehrteilige Deckelteil 8 kann vor Einbau in den Rohbau auf Funktion getestet werden; die so fertig eingestellte modulare Einheit kann dann an den Rohbau angeliefert und montiert werden.

Zusätzlich kann die Verriegelung 13 in weiterer Funktion die Erweiterung 10 auch in ihrer zu der Oberseite 11 des Hauptteils 9 zumindest nahezu fluchtenden Stellung an einem nach vorne anschließenden Karosseriebereich 21, insbesondere einer Rückwand eines Insassenraums, halten, wobei das Widerlager dort nicht am Deckelteil 8 angeordnet sein muss, da hier mit erheblichem Abstand zur Beladeöffnung die Kofferraumeinschrankung nicht mehr so bedeutsam ist.

Daher ist es besonders günstig, wenn die Verriegelung 13 die Erweiterung 10 in dieser zu der Oberseite 11 des Hauptteils 9 zumindest nahezu fluchtenden Stellung an einem einfachen Widerlager des Karosserierohbaus und in geöffneter Stellung am Hauptteil 9 des Deckelteils 8 hält. Beide sicherungen können durch denselben ausfahrbaren Bolzen 14 erreicht werden, der damit eine Doppelfunktion erhält und der in der Bewegung der Erweiterung 10 eingefahren ist und damit keine Kollisionsgefahr bewirkt.

## Patentansprüche

1. Cabriolet-Fahrzeug (1) mit einem in Öffnungsstellung im hinteren Fahrzeugbereich in einem Dachablageraum halterbaren Dach (2), wobei zur zumindest teilweisen Abdeckung des Dachablageraums ein Deckelteil (8) vorgesehen ist, das mehrteilig ausgebildet ist und einen gegenüber der Fahrzeugkarosserie (3) beweglichen Hauptteil (9) sowie eine gegenüber diesem mittelbar oder unmittelbar verlagerbare Erweiterung (10) umfasst, die zwischen einer zu einer Oberseite (11) des Hauptteils (9) zumindest nahezu fluchtenden Stellung und einer Speicherstellung unter den Hauptteil (9) verlagerbar ist,
**dadurch gekennzeichnet,**
**dass** die Erweiterung (10) in Speicherstellung beabstandet zu sie haltenden Teilen einer Anbindung (12) verriegelbar ist.

2. Cabriolet-Fahrzeug (1) mit einem in Öffnungsstellung im hinteren Fahrzeugbereich in einem Dachablageraum halterbaren Dach (2), wobei zur zumindest teilweisen Abdeckung des Dachablageraums ein Deckelteil (8) vorgesehen ist, das mehrteilig ausgebildet ist und einen gegenüber der Fahrzeugkarosserie (3) beweglichen Hauptteil (9) sowie eine gegenüber diesem mittelbar oder unmittelbar verlagerbare Erweiterung (10) umfasst, die zwischen einer zu einer Oberseite (11) des Hauptteils (9) zumindest nahezu fluchtenden Stellung und einer Speicherstellung unter den Hauptteil (9) verlagerbar ist, insbesondere nach Anspruch 1,
**dadurch gekennzeichnet,**
**dass** die Erweiterung (10) in Speicherstellung an dem Hauptteil (9) verriegelbar ist.

3. Cabriolet-Fahrzeug (1) nach einem der Ansprüche 1 oder
2, **dadurch gekennzeichnet,**
**dass** die Erweiterung (10) gegenüber dem Hauptteil (9) um eine Querachse nach unten einschwenkbar ist.

4. Cabriolet-Fahrzeug (1) nach einem der Ansprüche 1 bis 3,
**dadurch gekennzeichnet,**
**dass** der Hauptteil (9) in Seitenansicht abgewinkelt ist, in geschlossener Stellung einen im wesentlichen horizontal liegenden (16) sowie einen im wesentlichen vertikal stehenden Abschnitt (17) umfasst und ein widerlager (15) der Verriegelung (13) an dem vertikalen Abschnitt (17) angeordnet ist.

5. Cabriolet-Fahrzeug (1) nach einem der Ansprüche 1 bis 4,
**dadurch gekennzeichnet,**
**dass** die Verriegelung (13) einer in fluchtender Stellung vorderen Kante (18) der Erweiterung (10) zugeordnet ist.

6. Cabriolet-Fahrzeug (1) nach einem der Ansprüche 1 bis
5, **dadurch gekennzeichnet,**
**dass** die Verriegelung (13) zumindest einen verschiebbaren Bolzen (14) als Riegel umfasst, der in ein Widerlager (15) am Hauptteil (9) einschiebbar ist.

7. Cabriolet-Fahrzeug (1) nach einem der Ansprüche 1 bis 6,
**dadurch gekennzeichnet,**
**dass** der Riegel (14) durch einen eigenen Antrieb an der Erweiterung (10) beweglich ist.

8. Cabriolet-Fahrzeug (1) nach einem der Ansprüche 1 bis 7,
**dadurch gekennzeichnet,**
**dass** die Erweiterung (10) einen mittleren Abschnitt (19) und gegenüber diesem bewegliche Seitenteile (20) umfasst, die in eingeschwenkter Stellung der Erweiterung (10) mit einer abwärtsgerichteten Komponente gegenüber dem mittleren Abschnitt (19) abgewinkelt stehen.

9. Cabriolet-Fahrzeug (1) nach Anspruch 8,
**dadurch gekennzeichnet,**
**dass** die Bewegung der Seitenteile (20) zum mittleren Abschnitt (19) ohne eigenen Antrieb bewirkbar ist.

10. Cabriolet-Fahrzeug (1) nach einem der Ansprüche 1 bis
9, **dadurch gekennzeichnet,**
**dass** das Fahrzeug (1) ein Dach (2) mit bei Öffnung eindrehbaren C-Säulen (7) aufweist.

11. Cabriolet-Fahrzeug (1) nach einem der Ansprüche 1 bis
10, **dadurch gekennzeichnet,**
**dass** die Verriegelung (13) in weiterer Funktion in zu der Oberseite (11) des Hauptteils (9) zumindest nahezu fluchtender Stellung der Erweiterung (10) diese an einem nach vorne anschließenden Karosseriebereich (21), insbesondere einer Rückwand eines Insassenraums, hält.

12. Cabriolet-Fahrzeug (1) nach einem der Ansprüche 1 bis
11, **dadurch gekennzeichnet,**
**dass** die Verriegelung (13) die Erweiterung (10) in zu der Oberseite (11) des Hauptteils (9) zumindest nahezu fluchtender Stellung an einem Widerlager des Karosserierohbaus und in geöffneter Stellung am Hauptteil (9) des Deckelteils (8) hält.

13. Cabriolet-Fahrzeug (1) nach einem der Ansprüche 1 bis
12, **dadurch gekennzeichnet,**
**dass** die Erweiterung (10) in ihrer zu der Oberseite (11) des Hauptteils (9) zumindest nahezu fluchtenden Stellung einen Durchtrittsbereich für Dachgestängeteile zumindest teilweise abdeckt.
